# EUROPÄISCHE PATENTANMELDUNG

(11) **EP 1 670 211 A2**
(43) Veröffentlichungstag der Anmeldung: **14.06.2006**
(21) Anmeldenummer: 05026625.3
(22) Anmeldetag: 06.12.2005
(51) Int. Cl.: H04L 29/08, H04L 12/18

(54) **Verfahren und System zum gemeinschaftlichen Internetsurfen**

(30) Priorität: 09.12.2004 DE 102004059436
(71) Anmelder: Combots Product GmbH & Co.KG, 76227 Karlsruhe (DE)
(72) Erfinder: Schüler, Frank, 76228 Karlsruhe (DE); Müller, Thomas, 76137 Karlsruhe (DE); An, Zong Hyeck, 76227 Karlsruhe (DE); Knaup, Markus, 76137 Karlsruhe (DE)
(74) Vertreter: DTS München

(57) **Zusammenfassung**

Verfahren und System für das gemeinschaftliche Surfen, insbesondere Browsen, mehrerer Nutzer in einem Rechnernetzwerk mit mehreren Rechnern, die eine Vielzahl von Netzwerkseiten bereitstellen, wobei jedem Nutzer eine eigene Anwendung zugeordnet ist. Bei dem Verfahren und dem System werden sowohl die Adressen der Netzwerkseiten als auch die Steuerbefehle der Nutzer übertragen.

## Beschreibung

### Gebiet der Erfindung

Die Erfindung betrifft ein Verfahren für das gemeinschaftliche Surfen mehrerer Nutzer in einem Rechnernetzwerk mit mehreren Rechnern, die eine Vielzahl von Netzwerkseiten bereitstellen sowie ein System zur Durchführung eines derartigen Verfahrens.

### Stand der Technik

Aus der US 2002/0083134 A1 sind ein Verfahren und ein System zum gemeinschaftlichen Surfen mittels Browsern bekannt, bei welchen mehrere Nutzer über ihr jeweiliges so genanntes Client-Programm gemeinschaftlich innerhalb einer Sitzung verschiedene Netzwerk- oder auch Webseiten browsen können. Dazu wird ein bestimmtes Client-Programm als "Gruppenführer" (session leader) bestimmt. Jedes Mal wenn dieser "Gruppenführer" eine neue Netzwerkseite ansteuert, wird an die übrigen Client-Programme die Adresse oder auch URL der angesteuerten Netzwerkseite übertragen. So wird sichergestellt, dass die verschiedenen Client-Programme beim Browsen stets allesamt ein und dieselbe Netzwerkseite anzeigen.

Bei diesem bekannten System und Verfahren findet aber durch das alleinige Austauschen der jeweils aktuellen URL nur eine recht beschränkte Rückkopplung zwischen den verschiedenen Client-Programmen statt. So befinden sich alle Nutzer zwar stets auf der gleichen Netzwerkseite, jedoch können die Nutzer sich nur umständlich über bestimmte Aspekte oder Einzelheiten der gemeinschaftlich betrachteten Netzwerkseite austauschen. Wenn ein Nutzer bspw. die anderen Nutzer auf eine besondere Textstelle innerhalb der betrachteten Netzwerkseite aufmerksam machen will, so kann er dies bei dem bekannten System und Verfahren nur durch einen separaten Kommunikationskanal wie Telefon oder Instant Messaging tun. Über diesen Kanal muss der Nutzer den anderen Nutzern dann aufwändig beschreiben, wo sich die besondere Textstelle genau auf der betrachteten Netzwerkseite befindet und was genau daran besonders ist.

### Aufgabe der Erfindung

Es ist daher eine Aufgabe der vorliegenden Erfindung, ein Verfahren und ein System zum gemeinschaftlichen Surfen mehrerer Nutzer vorzuschlagen, bei welchen eine einfachere, direktere und unmittelbarere Rückkopplung zwischen den Nutzern beim gemeinsamen Surfen erreicht wird.

### Beschreibung der Erfindung

Diese Aufgabe wird erfindungsgemäß durch ein Verfahren für das gemeinschaftliche Surfen mehrerer Nutzer in einem Rechnernetzwerk mit mehreren Rechnern, die eine Vielzahl von Netzwerkseiten bereitstellen, wobei jedem Nutzer eine eigene Anwendung zugeordnet ist, gelöst, wobei das Verfahren folgende Schritte umfasst:
- Starten eines Modus zum gemeinsamen Browsen in einer ersten Anwendung eines ersten Nutzers;
- Kopplung der beiden Anwendungen; und
- Übertragung der Adresse der gegenwärtigen, von der einen Anwendung angezeigten Netzwerkseite an die andere Anwendung;
gekennzeichnet durch den weiteren Schritt:
- Übertragung von an die eine Anwendung gerichteter Steuerbefehle an die andere Anwendung und dortige Ausführung der Steuerbefehle.

Dadurch, dass von dem einen Nutzer in seine Anwendung eingegebene Steuerbefehle an die Anwendung des anderen Nutzers (oder der anderen Nutzer) übertragen und dort ausgeführt werden, "sieht" der andere Nutzer sofort und unmittelbar, in welcher Weise der erstere Nutzer mit der gemeinsam betrachteten Netzwerkseite interagiert. Dadurch kann der erstere Nutzer einfach durch Eingabe eines Steuerbefehls in seiner Anwendung, wie beispielsweise das Bewegen seines Mauscursors, den anderen Nutzer auf ein besonderes Detail der gemeinsam betrachten Netzwerkseite (wie z.B. eine dort eingebettete Grafik) aufmerksam machen.

Das Merkmal "Steuerbefehl" umfasst jede Art von Signal zur Signalisierung von Steuerungsprozessen bei Ausführung der Anwendung (Anwendungsprogramm), also etwa Steuersignale zur Darstellung von Mauszeigern oder zur Eingabe von Tastaturbefehlen, insbesondere im Zusammenhang mit der mechanischen Mensch-Maschine-Schnittstelle bestehend aus Maus und Tastatur. Ebenso sind Signale bezüglich der grafischen Mensch-Maschine-Schnittstelle, insbesondere Bildschirm, oder mit der akustischen Schnittstelle, insbesondere Lautsprecher und/oder Mikrofon, umfasst. Hiezu sind insbesondere Steuersignale und signalisierte Parameter zu nennen, die sich auf Bildschirmauflösung bzw. Audiokarten-Einstellungen beziehen. Auch sonstige Steuersignale, wie etwa Fehlermeldungen, sind vom Merkmal "Steuerbefehl" umfasst. Durch Übertragung dieser Steuerbefehle des Anwender-Programms des einen Nutzers an das Anwender-Programm des anderen Nutzers, wird eine neue und sehr vorteilhafte Art des gemeinschaftlichen Surfens geschaffen, wie es noch eingehend beschrieben wird.

Dabei bedeutet "gemeinschaftliches Surfen", das gemeinsame Besuchen von Netzwerkseiten, bei dem mindestens ein erster und ein zweiter Nutzer an ihren jeweiligen verschiedenen Rechnern mittels einer jeweiligen Anwendung gemeinsam durch das Internet "surfen". Das heißt, dass die beiden Nutzer zusammen in einer gemeinsamen Sitzung hintereinander mehrere Internetseiten ansteuern, betrachten und wieder verlassen. Der Zugriff auf die dort (auf Servern) hinterlegten Informationen, insbesondere auf Texte, Bilder, Audio- und/oder Videodaten, kann über Standard-Anwendungen, nämlich sog. Browsern oder FTP-Clients, erfolgen. Dazu werden die Informationen im HTTP-Format für die Browser bereitgestellt bzw. werden per FTP-Protokoll von den FTP-Clients abgerufen. Diese Netzwerkseiten sind also öffentlich zugänglich. Auch kann der Zugriff über spezielle Client-Anwendungen erfolgen, die ausschließlich diese Informationen lesen und anzeigen können. Dazu werden die Informationen in speziellen Formaten und/oder über spezielle Protokolle gesichert hinterlegt, so dass die Nutzer nur über diese Client-Anwendungen auf die Informationen zugreifen können. Die Netzwerkseiten sind sozusagen "private" Netzwerkseiten. Ebenfalls können die Anwendungen beiderlei Arten von Formaten und/oder Protokollen verarbeiten, so dass die Nutzer mit den Anwendungen sowohl öffentlich surfen, insbesondere browsen, wie auch privat surfen können.

Der Begriff Nutzer steht in diesem Zusammenhang für eine natürliche Person, die über einen Rechner und eine dazugehörige Anwendung verfügt, um damit "in das Internet zu gehen".

Somit ist unter dem Begriff Rechnernetzwerk im Wesentlichen das Internet oder auch das World Wide Web zu verstehen, wobei es sich bei dem Rechnernetzwerk auch um ein sonstiges Netzwerk wie bspw. ein Intranet, ein WLAN, ein Mobilfunknetz oder einer Kombination mehrerer solcher Netze handeln kann.

Als Rechner gelten in der Hauptsache die weit verbreiteten Computer wie Desktop-PCs, Laptops, Notebooks oder ähnliches. Es kann sich aber auch um weitere Endbenutzereinheiten wie Palmtops oder Handys handeln.

In diesem Zusammenhang ist eine Netzwerkseite, Webseite oder auch Webpage ein Dokument, welches auf einem Server abgelegt ist und in der Regel Bestandteil einer Website ist.

Die Anwendung, welche von einem Nutzer zum gemeinschaftlichen Surfen oder Browsen verwendet wird, ist eine Applikation, welche lokal auf dem Rechner des Nutzers installiert ist. Es kann sich um einen so genannten Internet Browser mit einem besonderen Plug-In handeln. Die Anwendung kann aber auch eine vielseitige eigene Telekommunikationsanwendung sein, die unter anderem eine Funktionalität zum gemeinsamen Surfen im Internet aufweist. Insbesondere kann die Anwendung die Telekommunikation mit einem einzigen ausgewählten Nutzer ermöglichen.

Das erfindungsgemäße Verfahren ist besonders bevorzugt auf das gemeinschaftliche Surfen lediglich zweier Nutzer ausgelegt. In diesem Fall surfen die beiden Nutzer zusammen über jeweils eine Anwendung, die ausschließlich zur privaten Kommunikation mit dem anderen einzelnen Nutzer und nicht zur Kommunikation mit einem beliebigen anderen Nutzer verwendbar ist. Dies bedeutet, dass zum gemeinsamen Surfen oder Browsen mit einer bestimmten Person der Nutzer immer diejenige einer Mehrheit von Anwendungen wählen muss, die dieser bestimmten Person zugeordnet ist.

Bevor die Nutzer gemeinsam surfen, kann das Aussenden einer Einladung zum gemeinsamen Browsen von der ersten Anwendung zu mindestens einer zweiten Anwendung eines zweiten Nutzers erfolgen, wobei eine Annahme der Einladung durch die zweite Anwendung erforderlich ist.

Unter einem Modus zum gemeinsamen Surfen oder Browsen ist ein Zustand der Anwendung zu verstehen, in welchem die Anwendung zum gemeinsamen Internetsurfen mit anderen Nutzern verwendet wird. Die Anwendung verfügt vorteilhafterweise auch über andere Modi, wie z.B. die bekannte Möglichkeit, alleine zu browsen. Diese Modi können auch verschiedene weitere Funktionalitäten wie File-sharing, VoIp, Email, Instant Messaging oder ähnliches umfassen.

Sobald sich die erste Anwendung im Modus zum gemeinsamen Surfen befindet, wird bevorzugt eine Einladung, Mitteilung oder auch Aufforderung an die weiteren Anwendungen gesandt, mit welchen das gemeinsame Surfen erfolgen soll. Der Nutzer der ersten Anwendung veranlasst das Aussenden entsprechender Einladungen an die Anwendungen derjenigen Nutzer, mit welchen er zusammen im Internet "surfen" will.

Sobald die weiteren Anwendungen die Einladung empfangen haben, kann diese deren Nutzern angezeigt werden. Die Nutzer können dann entscheiden, ob sie der Aufforderung zum gemeinsamen Surfen durch den ersten Nutzer nachkommen wollen. Falls ein weiterer Nutzer die Einladung annehmen will, kann er sich durch einen entsprechenden Befehl an seine Anwendung der "Surf together"-Sitzung anschließen.

Wenn die Einladung durch einen oder mehrere Nutzer angenommen wurde, findet eine Kopplung zwischen den entsprechenden Anwendungen statt. Das heißt, dass nun Verbindungen zwischen den verschiedenen Anwendungen bestehen, über welche die Adressen der angezeigten Netzwerkseiten und diverse Steuerbefehle der Nutzer zwischen den Anwendungen übertragen werden können.

Über das Netzwerk über welches die Rechner miteinander in Verbindung stehen, wird zum einen beim Besuch jeder neuen Netzwerkseite die Adresse oder auch URL dieser Seite an alle Anwendungen übertragen. Dadurch verfügt jede Anwendung immer über die Kennung der aktuellen Seite, so dass diese von allen Anwendungen im Wesentlichen zeitgleich geladen und dargestellt werden kann.

Zusätzlich zum Übertragen der Adressen erfolgt auch die Übertragung einiger oder aller von einem Nutzer an seine Anwendung gerichteten Steuerbefehle an die Anwendungen anderer Nutzer. So kann z.B. der durch einen Nutzer ausgeführte Scroll-Befehl an die Anwendungen anderer Nutzer übertragen werden. Es kann auch die Texteingabe eines Nutzers in ein Textfeld der aktuellen Netzwerkseite an die Anwendungen anderer Nutzer übersandt werden. Unter dem Begriff Steuerbefehle sind alle Arten von Anweisungen zu verstehen, welche ein Nutzer über diverse Eingabemittel wie z.B. Maus oder Tastatur an seine Anwendung richtet. Steuerbefehle bzw. Controls sind hierbei bevorzugt sämtliche Eingabebefehle bzw. hierdurch ausgelöste Eingabesignale, die über Eingabegeräte bzw. Schnittstellen durch den Nutzer an den eigenen Rechner gegeben werden, wie insbesondere Tastaturbefehle, Mausaktionen wie Bewegung der Maus oder das Drücken von Knöpfen, Eingabesignale von Zeichentableaus, Pads, USB-Fernbedienungen, Touchscreen-Signale, etc.

Der Begriff Steuerbefehl umfasst jede Art von Steuerbefehl oder -signal, das auf der jeweiligen Seite der Nutzer, also auf dem jeweiligen lokalen Rechner - eigentlich nur für diesen Nutzer - erzeugt wird. Erfindungsgemäß werden nun auch diese Steuerbefehle an den Rechner des anderen Nutzers übertragen, um dort verarbeitet zu werden.

Vorzugsweise findet eine wechselseitige Übertragung von Steuerbefehlen statt. So können im Falle des gemeinsamen Browsens eines ersten Nutzers einer ersten Anwendung mit einem zweiten Nutzer einer zweiten Anwendung an die erste Anwendung gerichtete Steuerbefehle von der ersten Anwendung an die zweite Anwendung übertragen werden und umgekehrt.

Vorzugsweise werden dann auch sowohl an die erste als auch an die zweite Anwendung gerichtete Steuerbefehle in einer Anwendung gleichzeitig dargestellt.

Dies kann z.B. bedeuten, dass der erste Nutzer in seiner Anwendung nicht nur auf bekannte Weise seinen eigenen Mauscursor dargestellt sieht, sondern zusätzlich auch den Mauscursor des zweiten Nutzers. In diesem Fall sieht der erste Nutzer dann in Echtzeit, wie der zweite Nutzer auf der angezeigten Netzwerkseite seinen Mauscursor bewegt. Umgekehrt kann der zweite Nutzer in seiner Anwendung den Mauscursor des ersten Nutzers verfolgen. Durch diese Rückkopplung können die beiden Nutzer sich auf besonders effiziente und schnelle Weise austauschen. So kann bspw. der erste Nutzer durch Bewegen seines Mauscursors auf ein bestimmtes Detail der gemeinsam betrachteten Netzwerkseite den zweiten Nutzer auf dieses Detail aufmerksam machen. Vorteilhaft hierbei ist auch, dass dem zweiten Nutzer durch die Übertragung der URL und der Steuerbefehle lediglich kleine Datenmengen übertragen werden und der zweite Nutzer über seine eigene Datenverbindung in beispielsweise das Internet geht. Die Inhaltsdaten bezüglich der betrachteten Seite müssen daher nicht zwischen den Nutzern ausgetauscht werden sondern werden von jedem Nutzer separat geladen.

Bei einer anderen Ausführungsform der Erfindung kann auch eine ausschließlich einseitige Übertragung von an die erste Anwendung gerichteter Steuerbefehle von der ersten Anwendung an die zweite Anwendung stattfinden. In diesem Fall werden Steuerbefehle des ersten Nutzers dem zweiten Nutzer dargestellt aber nicht umgekehrt. Folglich ist der erste Nutzer sozusagen der Führer oder Handelnde während der zweite Nutzer Zuschauer ist. Diese Anwendung kann z.B. im Rahmen einer Internet-Schulung nützlich sein. Der erste Nutzer wäre dann ein Lehrer, welcher dem zweiten Nutzer, d.h. dem Schüler, im Wege eines gemeinschaftlichen Browsens die Funktionalitäten einer bestimmten Netzwerkseite vorstellt. Der Schüler kann dann sozusagen live miterleben, wie der Lehrer verschiedene Elemente der Netzwerkseite bedient.

Wenn bei dem erfindungsgemäßen Verfahren zusätzlich eine Mal- oder Kommentierfunktion zur Kommentierung einer angezeigten Netzwerkseite bereitgestellt wird, können die gemeinsam browsenden Nutzer sich besonders einfach und intuitiv austauschen. Bevorzugt umfasst die Kommentierfunktion eine auf eine angezeigte Netzwerkseite aufgebrachte Zeichen- oder Kommentierfläche. Diese Fläche kann auch als Schicht, Überzug oder Layer bezeichnet werden. Sie ist auf die dargestellte Netzwerkseite aufgelegt und ist vorzugsweise durchsichtig, so dass die Netzwerkseite weiterhin vollständig erkennbar ist. Auf dieser Schicht kann ein Nutzer mittels entsprechender Mal-, Kommentier oder Zeichenwerkzeuge bspw. Teile der Netzwerkseite optisch hervorheben. Dieser von einem Nutzer durchgeführte Zeichenvorgang wird vorzugsweise dem anderen Nutzer in Echtzeit übertragen und in seiner Anwendung dargestellt.

Weiterhin kann zusätzlich eine Zentrierfunktion zur Neuausrichtung einer angezeigten Netzwerkseite bereitgestellt werden. Wenn ein Nutzer diese Funktion ausführt, findet also eine Verschiebung der Darstellung der Netzwerkseite von einem derzeitigen Ausschnitt zu einem anderen Ausschnitt der Netzwerkseite statt. Diese Zentrierfunktion wird bevorzugt durch ein Zentrieren der angezeigten Netzwerkseite auf einen Cursor des ersten Nutzers oder einen Cursor des zweiten Nutzers durchgeführt. Die Zentrierung kann auch auf der Grundlage beider Cursor erfolgen. In diesem Fall könnte z.B. eine Zentrierung auf den Mittelpunkt der zwischen den beiden Cursoren gedachten Linie durchgeführt werden.

In einer weiteren Ausgestaltung der Erfindung können eine Zusammenfassung der Adressen der angezeigten Netzwerkseiten zu einem Eintrag und einer Speicherung dieses Eintrages erfolgen. So können bspw. die Adressen aller Webseiten, die durch zwei Nutzer während eines gemeinsamen Browsens nach und nach aufgesucht wurden zu einer Gesamtheit zusammengefasst und in einer Historie abgespeichert werden. Dies hat den Vorteil, dass ein Nutzer eine vor einiger Zeit mit anderen Nutzern durchgeführte Surf-Sitzung wieder aufrufen und nachvollziehen kann.

Zum besseren Auffinden und Sortieren der Einträge werden vorzugsweise neben den Adressen auch weitere Informationen wie Nutzernamen, Status oder Datum als Teil des Eintrages gespeichert.

Es kann auch vorgesehen sein, dass die Adressen der von mehreren Nutzern gleichsam bevorzugten Netzwerkseiten in einer gemeinsamen Favoritenliste zusammengefasst werden. So können in dieser Liste - bevorzugt durch jeden der Nutzer parallel - die Adressen derjenigen Seiten aufgenommen werden, die von einer bestimmten Nutzergruppe während ihrer gemeinsamen Surf-Sitzungen regelmäßig aufgesucht werden bzw. werden sollen. Durch die gemeinsame Favoritenliste kann die Nutzergruppe während des gemeinsamen Browsens besonders schnell und bequem auf die von ihr am meisten frequentierten Seiten gelangen.

Es ist bei dem erfindungsgemäßen Verfahren zusätzlich von Vorteil, wenn die anwendungsgemäße Ansicht des einen Nutzers in der Anwendung des anderen Nutzers dargestellt wird. Insbesondere kann der eine Nutzer denjenigen Ausschnitt der gemeinsam betrachteten Seite dargestellt bekommen, welchen der andere Nutzer sieht. Dadurch werden eine noch bessere Rückkopplung und damit ein einfacherer Austausch zwischen den Nutzern ermöglicht.

Es ist weiterhin von Vorteil, wenn eine Darstellung des Netzwerkseiten-Ladezustandes in der ersten und/oder der zweiten Anwendung eines ersten Nutzers bzw. eines zweiten Nutzers erfolgt. Bevorzugt wird dabei der Netzwerkseiten-Ladezustand derjenigen Anwendung, welche die anzuzeigende Netzwerkseite am langsamsten lädt, in der anderen Anwendung dargestellt. Ziel ist auch hier eine noch bessere Rückkopplung zwischen den Nutzern. So kann der Nutzer mit der schnelleren Netzwerkverbindung anhand des ihm dargestellten Ladezustandes des anderen Nutzers erkennen, ob sich bei diesem bereits wie bei ihm die vollständige Netzwerkseite aufgebaut hat. Um eine solche Anzeige des Ladevorgangs der jeweils anderen Seite zu ermöglichen, tauschen die Anwendungen über das Netzwerk entsprechend Informationen aus.

Bevorzugt werden die besuchten Netzwerkseiten innerhalb einer vorgebbaren Fenstergröße auf Bildschirmen der Nutzer dargestellt, wobei zunächst die Bildschirmauflösungen der Bildschirme erfasst und eine Referenzauflösung bestimmt wird. Anschließend wird die Fenstergröße als einheitliche Fenstergröße für alle Bildschirme entsprechend der ermittelten Referenzauflösung vorgegeben. In diesem Zusammenhang wird besonders bevorzugt die Referenzauflösung gleich der geringsten Bildschirmauflösung bestimmt. Damit wird erreicht, dass alle Nutzer zumindest denjenigen Bildausschnitt sehen, den auch der Nutzer mit der geringsten Bildschirmauflösung sehen kann. Die Referenzauflösung kann aber auch anderweitig bestimmt werden, vorteilhafter Weise aus einer Mittelwertbildung über alle erfassten Bildschirmauflösungen.

Eine besonders vorteilhafte Ausgestaltung der Erfindung ergibt sich durch folgende weitere Schritte:
- Erfassen der über das gemeinschaftliche Surfen besuchten Netzwerkseiten;
- Auswerten zumindest der Adressen und Inhaltsangaben, insbesondere Metatags, der erfassten Netzwerkseiten und Erstellen eines für die Nutzer gemeinsamen Surfprofils;
- Auswerten des Surfprofils zumindest bei Eingabe eines Suchbegriffes durch einen Nutzer und Erzeugen sowie Vorschlagen einer Auswahl von Adressen von bereits besuchten Netzwerkseiten anhand des erstellten Surfprofils, insbesondere anhand von Ähnlichkeiten zwischen dem Suchbegriff und den Inhaltsangaben der Netzwerkseiten.

Durch diese zusätzlichen Maßnahmen, wird eine neue intelligente Such-Funktion geschaffen, die das gemeinsame Surfen sehr benutzerfreundlich ausgestaltet, indem die Nutzer abhängig von ihren gemeinsamen Interessen Vorschläge angezeigt bekommen.

In diesem Zusammenhang werden bevorzugt noch Zusatzangaben zu den über das gemeinschaftliche Surfen besuchten Netzwerkseiten erfasst, insbesondere Besuchszeiten und/oder Besuchsdauer. Ergänzend oder alternativ dazu werden weitere Inhaltsangaben, insbesondere Extrakte aus den Text-Informationen der Netzwerkseiten, erfasst. Durch Auswerten dieser Zusatzangaben für das Erstellen des Surfprofils wird erreicht, dass auch über die reinen URL-Informationen hinaus eine Gewichtung der erfassten Information mit in die Suche einfließen kann. So werden noch besser passende Ergebnisse aufgefunden, als es sonst der Fall war.

Außerdem ist es besonders vorteilhaft, wenn ergänzend oder zusätzlich dazu Kommentierungseingaben der Nutzer erfasst werden, die mittels der Mail- oder Kommentierfunktion zur Kommentierung der besuchten Netzwerkseiten gemacht werden. Auch diese Kommentierungseingaben werden für das Erstellen des Surfprofils ausgewertet, was dazu führt, dass darüber hinaus auch der Blickwinkel der Betrachter der Seiten umfassender in das Suchergebnis einfließen kann. So kann der Kommentar "toll, das sieht gut aus" die Suche nach ähnlichen Inhalten anstoßen, während ein Kommentar wie "oh - wie lächerlich" dazu führen kann, dass eine besuchte Seite eher als Negativum in die folgende Suche einfließt.

Schließlich schlägt die vorliegende Erfindung auch ein System zur Durchführung der soeben beschriebenen Verfahren vor.

Kurzbeschreibung der Figuren
- Fig. 1: zeigt die Benutzeroberfläche einer erfindungsgemäßen Anwendung;
- Fig. 2a, 2b: zeigen die erfindungsgemäße Übertragung der Steuerbefehle zwischen zwei Anwendungen;
- Fig. 3a bis 3c: zeigen die erfindungsgemäße Zentrierfunktion;
- Fig. 4a, 4b: zeigen die erfindungsgemäße Mal- und Kommentierfunktion;
- Fig. 5a bis 5c: zeigen den erfindungsgemäßen Wechsel zwischen dem alleinigen Browsen, dem gemeinsamen beidseitig aktiven Browsen und dem gemeinsamen einseitig passiven Browsen;
- Fig. 6a, 6b: zeigen die erfindungsgemäße Darstellung der Ansicht des einen Nutzers in der Anwendung des anderen Nutzers;
- Fig. 7.: zeigt die erfindungsgemäße Historie.
- Fig. 8: zeigt die Benutzeroberfläche für gemeinsames Surfen und Suchen.

### Beschreibung bevorzugter Ausführungsformen

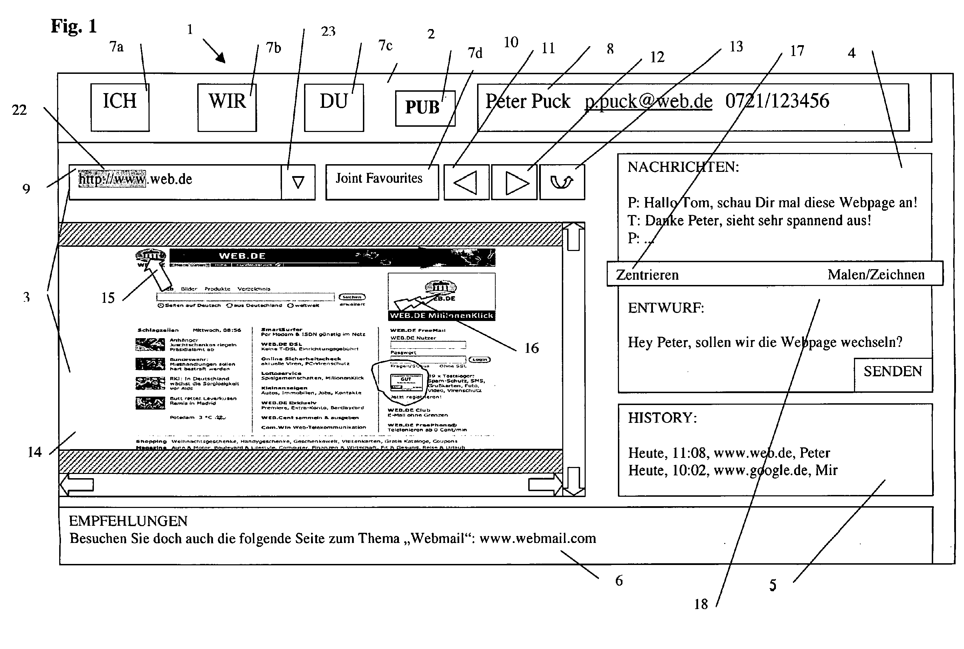

Fig.1 ist eine Gesamtdarstellung der Benutzeroberfläche einer Anwendung, wie sie für das erfindungsgemäße gemeinsame Surfen oder Browsen verwandt wird.

Die Anwendung mit der Benutzeroberfläche 1 ist ausschließlich für das gemeinsame Surfen oder Browsen zweier Personen ausgelegt. In der folgenden Beschreibung wir daher von dem besonderen Fall ausgegangen, dass lediglich ein erster Nutzer und ein zweiter Nutzer miteinander browsen (die Erfindung umfasst aber auch das Browsen beliebig vieler Personen miteinander).

Sowohl der erste Nutzer als auch der zweite Nutzer verfügen zum gemeinsamen Browsen über die wesensgleiche Anwendung mit der Benutzeroberfläche 1. In dem in Fig. 1 gezeigten Beispiel handelt es sich bei dem ersten Nutzer um Tom Meyer und bei dem zweiten Nutzer um Peter Puck. Die in Fig. 1 gezeigte Benutzeroberfläche 1 ist die Benutzeroberfläche von Tom Meyer.

Die Benutzeroberfläche 1 weist eine Kopfzeile 2, einen Browser-Bereich 3, einen Nachrichtenbereich 4, einen Historienbereich 5 sowie eine Fußzeile 6 auf.

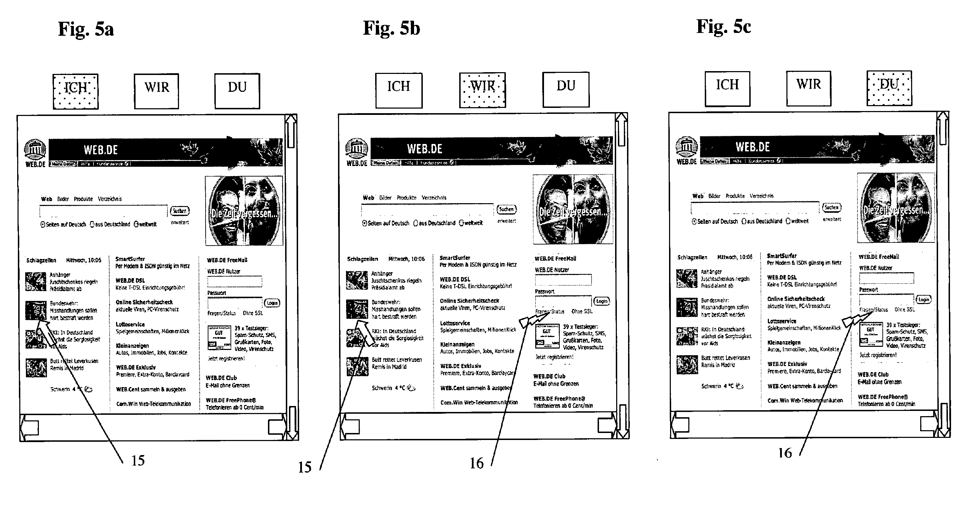

Die Kopfzeile 2 verfügt über drei Schaltflächen 7a bis 7c und eine Personenleiste 8. Mit den Schaltflächen 7a bis 7c kann der Nutzer zwischen den drei Modi "Alleine Surfen" ("Ich"), "aktives gemeinsames Surfen" ("Wir") und "passives gemeinsames Surfen" ("Du") wechseln. Außerdem gibt es noch einen Funktionsknopf 7d ("PUB"). Weitere Details hierzu finden sich weiter unten im Rahmen der Beschreibung der Fig. 5a bis 5c.

Die Personenleiste 8 gibt dem Nutzer Tom Meyer an, mit welcher anderen Person er über die Annwendung kommunizieren und browsen kann. Wie es der Personenleiste 8 der Fig. 1 zu entnehmen ist, kann Tom Meyer mit Peter Puck kommunizieren. Neben dem Namen des Gegenübers weist die Personenleiste 8 zusätzlich dessen Email-Adresse und dessen Telefonnummer auf (es können an dieser Stelle auch weitere Informationen über den gegenüberliegenden Nutzer aufgeführt sein). Die Email-Adresse sowie die Telefonnummer der Personenleiste 8 können auch als Schaltflächen ausgebildet sein, so dass Tom Meyer durch Drücken der Email-Adresse eine Email-Applikation zum Schreiben einer Email an Peter Puck starten oder durch Drücken der Telefonnummer ein Telefonat mit Peter Puck (bspw. über VoIP) initiieren kann.

Der Browser-Bereich 3 gleicht im Wesentlichen den bekannten Internet-Browsern. Er verfügt über eine Adresszeile 9, über eine "gemeinsame Favoriten"-Schaltfläche 10, Vor- und Zurück-Schaltflächen 11 und 12, einen "Refresh"-Knopf 13 sowie einen Pull-down Knopf 23.

Bei Betätigung der Schaltfläche 23 öffnet sich in bekannter Weise ein Fenster unterhalb der Adresszeile 9. In diesem Fenster wird eine Historie der zuletzt von Tom und Peter gemeinsam besuchten Netzwerkseiten aufgeführt. Genauer gesagt enthält das Fenster die URLs der zuletzt gemeinsam besuchten Seiten. Die URLs können nach verschiedenen Kriterien sortiert sein. Ähnlich zum Historienbereich 5 können auch in dem Fenster zusätzlich zu den URLs noch Zusatzinformationen angezeigt werden, wie z.B. Name desjenigen Nutzers, der zuerst auf diese URL gesurft ist, Datum, Uhrzeit, Besuchsdauer usw. So können Tom und Peter auf einfache und schnelle Weise durch Drücken des Knopfs 23 und durch entsprechende Auswahl früher besuchter Seiten erneut aufsuchen.

Im Anzeigebereich 14 wird die durch den Browser aufgerufene Netzwerkseite dargestellt. Auf dem Anzeigebereich 14 sind der Mauscursor 15 von Tom Meyer und der Mauscursor 16 von Peter Puck dargestellt.

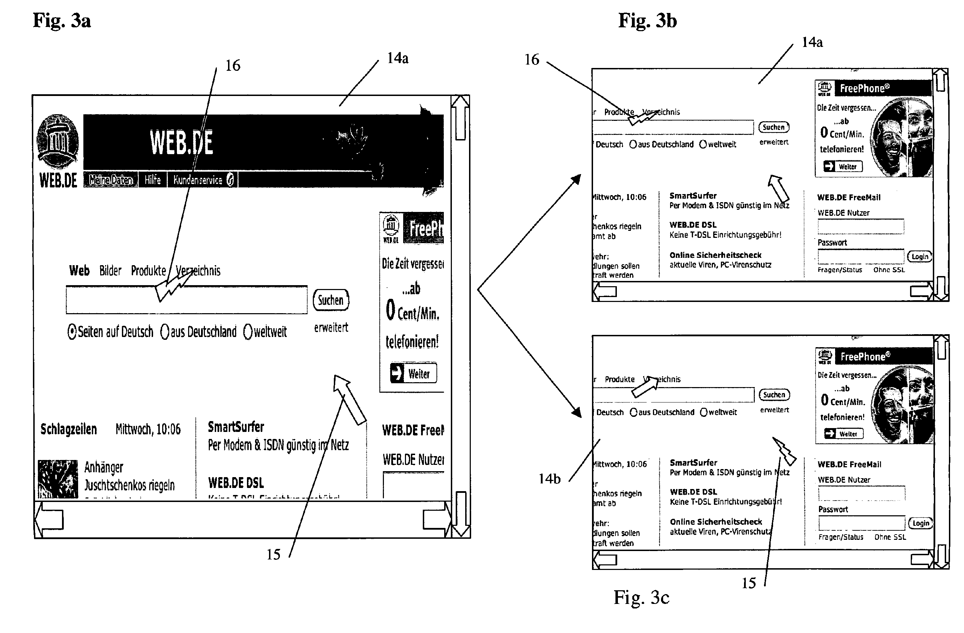

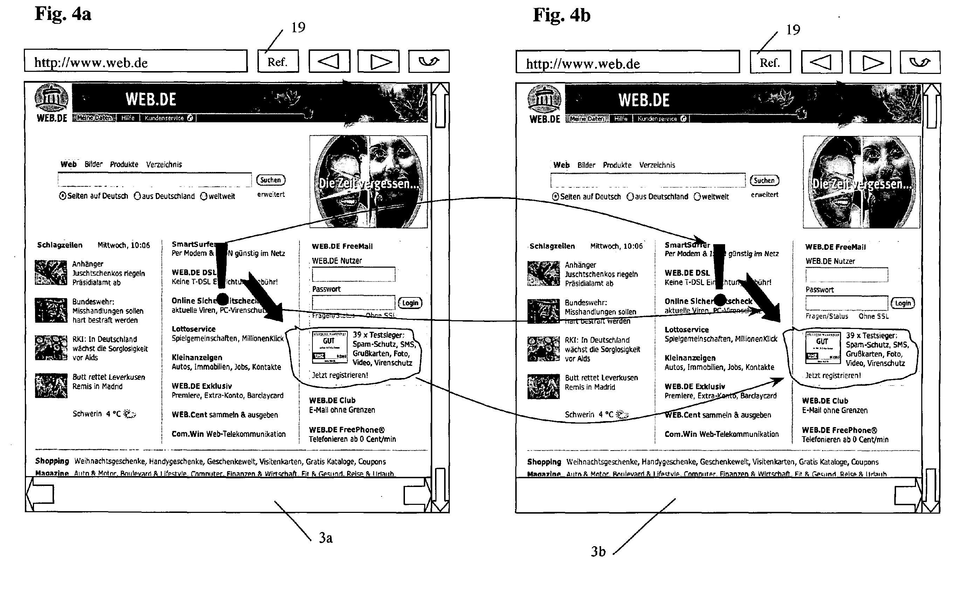

Der Nachrichtenbereich 4 dient zum Austauschen von geschriebenen Nachrichten zwischen Tom und Peter (so genanntes Instant Messaging oder auch Chatting). In der oberen Hälfte sind die bereits ausgetauschten Nachrichten zu erkennen. In der unteren Hälfte hat Tom gerade eine weitere Nachricht an Peter verfasst, welche er durch Drücken der "Senden"-Schaltfläche an Peter übermitteln könnte. Im Nachrichtenbereich 4 sind noch zwei Schaltflächen 17 und 18 vorgesehen, mit welchen jeweils die Zentrier- und die Malen/Zeichnen-Funktion ausgelöst werden können (s. Fig. 3a, 3b und 4a, 4b).

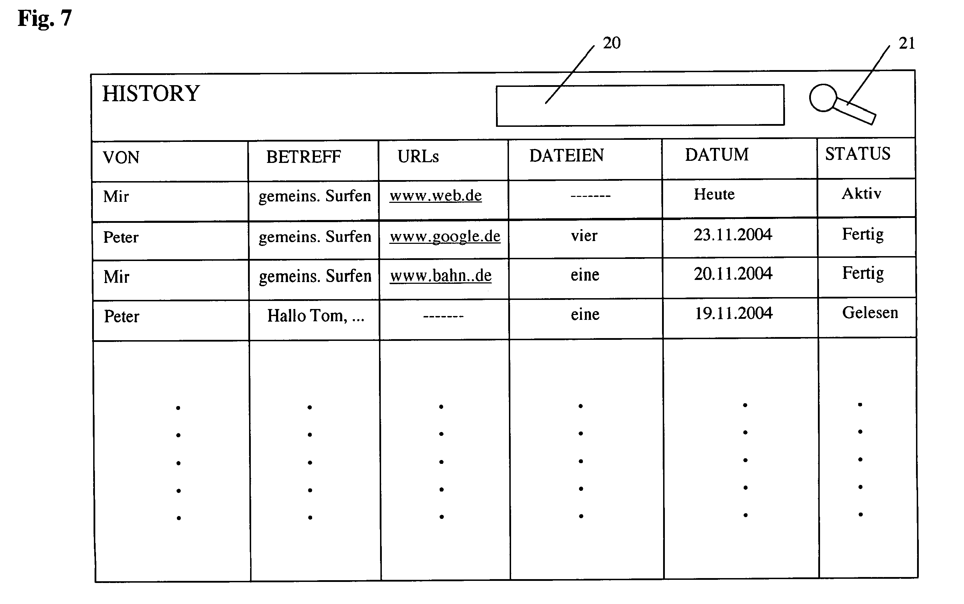

Im Historienbereich 5 werden die Einträge zu vergangenen gemeinsamen Surfsitzungen zwischen Tom und Peter angezeigt (s. auch Fig. 7).

In der Fußzeile 6 ist ein so genanntes "intelligentes Vorschlagswesen" verwirklicht. Dabei handelt es sich um eine Applikation, welche im Hintergrund die verschiedensten Informationen über das Verhalten von Tom und Peter sammelt, während diese gemeinsam im Internet surfen. So wird zum Beispiel registriert, welche Webseiten von den gemeinsam surfenden Nutzern angesteuert werden. Weiterhin wird ermittelt, welche Schlagwörter beim gemeinsamen Chat zwischen den Nutzern im Nachrichtenbereich 4 auftauchen. Es kann auch registriert werden, welche Teile einer angezeigten Netzwerkseite durch einen Nutzer mittels der Malen/Zeichnen-Funktion hervorgehoben werden (s. auch Fig. 4a, 4b). Durch die Erhebung und Sammlung dieser Informationen kann ein Benutzerprofil erstellt werden. Dieses Benutzerprofil spiegelt wieder, zu welchen Themen und Bereichen Tom und Peter gemeinsam gebrowst haben. Das Profil gibt also Anhaltspunkte dafür, womit sich Tom und Peter beim gemeinsamen Surfen beschäftigen und was sie interessiert.

Im konkreten Beispiel gemäß Fig. 1 hat die Applikation festgestellt, dass Tom und Peter gerade die Netzwerkseite www.web.de zusammen betrachten. Über den Nachrichtenbereich 4 konnte zudem anhand des Schlagwortes "spannend" ermittelt werden, dass Tom und Peter die betrachtete Seite gefällt. Schließlich wurde auch gespeichert, dass Tom mit der Malen/Zeichnen-Funktion einen bestimmten Bereich der Webseite zum Thema "FreeMail" hervorgehoben hat. Aus diesen Informationen wird geschlossen, dass Tom und Peter sich wohl für Webmail-Dienste interessieren. Dementsprechend wird in der Fußzeile 6 den beiden Nutzern die Empfehlung gegeben, sich auch die thematisch verwandte Internetseite www.webmail.com anzuschauen. Über die Fußzeile 6 können dem Nutzer regelmäßig dank des ermittelten Verhaltensprofils intelligente Vorschläge für weitere Dienste, Produkte und Angebote unterbreitet werden.

Die Fußzeile 6 kann im Übrigen auch zur Einspielung von Werbung dienen.

Das Bezugszeichen 22 verweist auf die Anzeige zum Ladezustand der Webseite. Je weiter der Balken fortgeschritten ist, umso fortgeschrittener ist der Ladevorgang. Der Balken 22 zeigt allerdings nicht den Ladezustand der Anwendung von Tom. Wie ersichtlich ist die Webseite in Toms Anwendung bereits vollständig geladen. Vielmehr zeigt der Balken 22 den Ladezustand bei Peters Anwendung an. So kann Tom anhand des Balkens 22 erkennen, dass der Ladevorgang der Seite bei Peter noch nicht abgeschlossen ist.

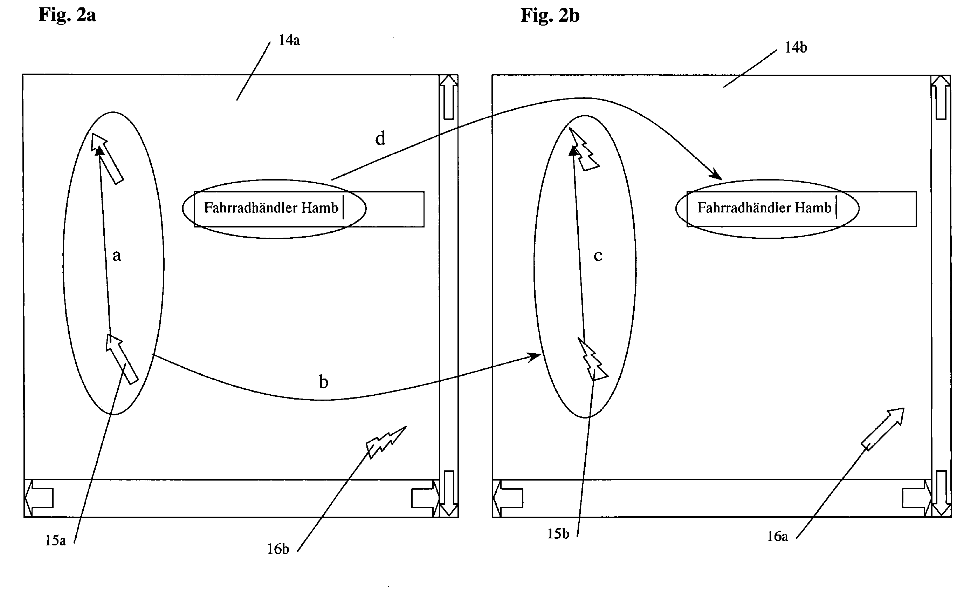

Mit Hilfe der Figuren 2a und 2b wird nun das Übertragen der Steuerbefehle beim gemeinsamen Surfen von einer Anwendung zur anderen veranschaulicht.

Fig. 2a zeigt den Anzeigebereich 14a von Tom und Fig. 2b zeigt den Anzeigebereich 14b von Peter. Tom und Peter browsen gemeinsam verschiedene Webseiten mit ihren jeweiligen Anwendungen. Dabei sehen sowohl Tom als auch Peter in ihrem jeweiligen Anzeigebereich ihren eigenen Mauscursor 15a bzw. 16a und den Mauscursor 16b bzw. 15b des anderen. In dem Beispiel gemäß Fig. 2a, 2b sieht der jeweilige Nutzer auf seiner Benutzeroberfläche 1 seinen eigenen Mauscursor immer als Pfeil und den Mauscursor des anderen als Blitz. Wenn nun Tom in seiner Anwendung seinen Mauscursor 15a (den Pfeil) nach oben bewegt (Schritt a), so wird diese Information an die Anwendung von Peter übertragen (Schritt b), so dass der dort dargestellte Cursor 15b (der Blitz) genau dieselbe Bewegung ausführt, welche Tom in seiner Anwendung mit seinem Cursor 15a durchgeführt hat (Schritt c). Ebenso wird eine Texteingabe von Tom simultan in der Anwendung von Peter angezeigt (Schritt d).

Zusätzlich oder anstatt zu dem in Fig. 2a, 2b gezeigten Beispiel können auch die an dem Rechner des einen Nutzers ausgegebenen Signale ("output")ebenso auf dem Rechner des anderen Nutzers ausgegeben werden. Wenn Tom bspw. eine akustische Fehlermeldung erhält, kann diese Information zu Peter übertragen werden und auch diesem zeitgleich eine akustische Fehlermeldung ausgegeben werden. Wenn Tom sich eine Audio-Datei anhört, kann diese gleichzeitig auch Peter vorgespielt werden.

Die Figuren 3a bis 3c veranschaulichen die Zentrier-Funktion, welche mit der Schaltfläche 17 (s. Fig. 1) ausgelöst werden kann.

Fig. 3a zeigt wiederum die Anzeigefläche 14a von Tom. Wenn Tom die Schaltfläche 17 bedient, wird der in der Anzeigefläche 14a dargestellte Seitenausschnitt durch einen Ausschnitt ersetzt, der auf den Cursor 15 von Tom zentriert ist (siehe Fig. 3b). In dem dargestellten Beispiel findet also sozusagen eine Verschiebung nach rechts und nach unten zum vom Cursor 15 definierten Punkt hin statt. Die Zentrierung wird simultan in der Anwendung von Peter durchgeführt (s. Fig. 3c). Die Zentrierung muss nicht in Bezug auf den Cursor 15 von Tom erfolgen. Hierzu kann auch der Cursor 16 von Peter dienen. Es kann auch eine Zentrierung auf ein Mittel zwischen den beiden Cursoren 15 und 16 vorgenommen werden.

Die Figuren 4a und 4b veranschaulichen die Malen/Zeichnen-Funktion, welche mit der Schaltfläche 18 (s. Fig. 1) ausgelöst werden kann.

Fig. 4a zeigt den Browser-Bereich 3a von Tom und Fig. 4b den Browser-Bereich 3b von Peter. Tom hat mit Hilfe der Malen/Zeichnen-Funktion eine Einzelheit der angezeigten Webseite umrandet und zur zusätzlichen Hervorhebung ein Ausrufezeichen und einen Pfeil hinzugefügt. Die von Tom durchgeführten Malvorgänge werden, wie durch die Pfeile angedeutet, an die Anwendung von Peter übertragen und simultan in dessen Browser-Bereich 3b angezeigt. So kann Tom Peter auf einfache Weise auf ein interessantes Detail der gemeinsam besuchten Webseite aufmerksam machen. Die von den Nutzern über die Malen/Zeichnen-Funktion erstellten Kommentare befinden sich auf einer durchsichtigen Auflage (Layer), welche sich über der eigentlichen Webseite befindet. Durch Drücken des Refresh-Knopfes 19 werden alle erstellten Kommentare wieder von der Auflage gelöscht.

Die Figuren 5a bis 5c veranschaulichen, wie Tom durch Drücken der Schaltflächen 7a bis 7c zwischen den verschiedenen Browser-Modi "Ich", "Wir" und "Du" wechseln kann. In Fig 5a befindet sich die Anwendung im "Ich"-Modus, das heißt, dass Tom auf herkömmliche Weise alleine im Internet browst (es ist nur der Cursor 15 von Tom dargestellt). In Fig. 5b erfolgt ein gemeinsames Surfen von Tom und Peter. Beide können aktiv mit ihren Cursoren 15 und 16 eingreifen. Im Modus gemäß Fig. 5c kann Tom selber nicht eingreifen. Er beobachtet lediglich das Browsen von Peter, der mittels seines Cursors 16 die Steuerbefehle gibt.

Mit Bezug auf die Figuren 5a-c sowie Figur 1 wird hier nun beschrieben, dass dem jeweiligen Nutzer auch noch ein mit "PUB" bezeichneter Funktionsknopf 7d (siehe Figur 1) bereitgestellt wird. Mit diesem Knopf (Button) kann der jeweilige Nutzer eine Publikationsfunktion aktivieren. Das bedeutet, das der einzelne Nutzer zunächst in seinem eigenen privaten Bereich innerhalb des "Ich"-Modus surft und die Historie dazu in einer entsprechend privaten - also nur diesem Nutzer zugänglichen - Surfhistorie gespeichert wird. Somit befinden sich die Daten der privaten Historie, wie etwa URL, Datum Uhrzeit, private Kommentare, Notizen etc., ausschließlich in einem separaten Bereich und nicht in der gemeinsamen Historie (vergl. Fenster 5 in der Fig. 1). Will der Nutzer aber dem anderen Nutzer auch diese privaten Daten mitteilen oder zumindest zur Verfügung stellen, so braucht er nur auf den Funktionsknopf "PUB" zu klicken. Dann werden die Daten aus der privaten Historie in die gemeinsame Historie übernommen. Ergänzend oder alternativ dazu werden die Daten in die private Historie des jeweils anderen Nutzers übertragen. Im einfachsten Fall bedeutet das, dass der eine Nutzer privat im "ICH"-Modus eine Webseite (z.B. www.web.de) besucht und durch Anklicken des Buttons "PUB" diese aktuell besuchte Webseite auch dem anderen Nutzer angezeigt wird, nämlich im beschriebenen "WIR"-Modus. Zumindest aber wird die aktuelle URL ("www.web.de") in die gemeinsame Historie eingetragen.

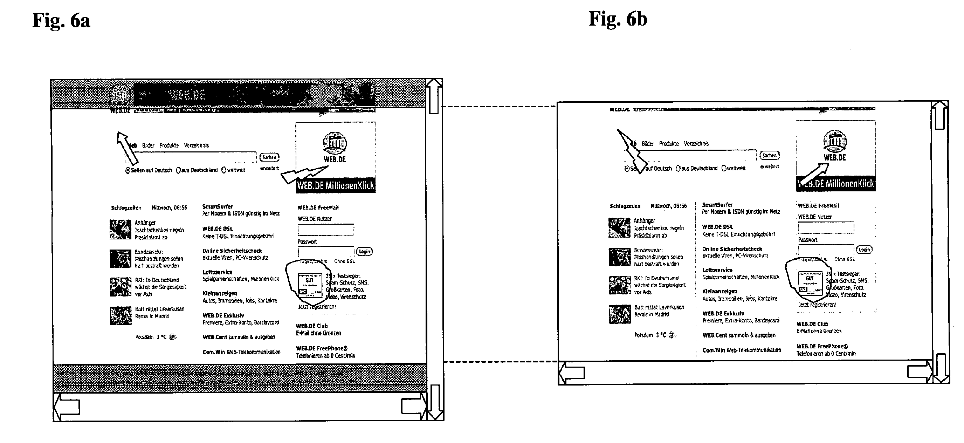

Die Fig. 6a und 6b zeigen die Darstellung der Ansicht des einen Nutzers in der Anwendung des anderen Nutzers. Wie es Fig. 6a zu entnehmen ist, kann Tom in seiner Anwendung (beispielsweise aufgrund einer höheren Auflösung oder wie hier wegen eines größer gewählten Browserfensters) einen größeren Ausschnitt der Webseite sehen als Peter (s. Fig. 6b). Damit Tom weiß, welchen Bereich Peter überhaupt sehen kann, wird derjenige Teil der Webseite, welcher bei Peter nicht angezeigt wird, bei Tom mit einem semitransparenten Schleier belegt. So weiß Tom z.B., dass er sich beim gemeinsamen Browsen nicht unmittelbar auf den mit einem Schleier bedeckten Bereich beziehen kann, da Peter diesen Abschnitt gar nicht wahrnimmt.

Schließlich ist Fig. 7 noch eine Detailansicht des Historienbereichs 5 zu entnehmen. Im Historienbereich 5 sind die Einträge zu vergangenen gemeinsamen Surf-Sitzungen zwischen Tom und Peter abgelegt. So zeigt der oberste Eintrag eine aktive Sitzung, die von Tom gestartet wurde ("Mir"). Während dieser Sitzung befinden sich Tom und Peter gerade gemeinsam auf der Webseite www.web.de. Der unterste Eintrag stellt keine Surf-Sitzung dar, sondern ist der Eintrag einer Textnachricht, die von Peter an Tom versandte wurde. Dabei hat Peter Tom auch gleichzeitig eine Datei übermittelt. In der Historienliste können also nicht nur Einträge zu vergangenen Surf-Sitzungen, sondern auch Einträge zu diversen anderen Kommunikationen zwischen Tom und Peter abgelegt sein. In dem Suchfeld 20 können Suchbegriffe eingegeben werden, nach welchen dann durch Drücken der Schaltfläche 21 (Lupe) in den verschiedenen Einträgen gesucht werden kann.

Das Verfahren für das gemeinsame Surfen wird vorzugsweise eingeleitet, indem ausgehend vom ersten Nutzer eine Einladung zum gemeinsamen Surfen von seiner Anwendung (Client auf dem ersten PC) zur Anwendung des zweiten Nutzers (Client auf dem zweiten PC) gesendet wird. Wenn der zweite Nutzer mittels seiner Anwendung die Einladung annimmt, schalten beide Anwendungen den "Surf-Together-Modus" ein.

Als Anwendungen (Clients) können Programme zum Anzeigen und/oder Abrufen von Informationen eingesetzt werden, die auf den Netzwerkseiten hinterlegt werden, wobei die Informationen in einem für diese Programme kodierten Format hinterlegt werden, insbesondere in einem ausschließlich durch die Programme dekodierbaren Format hinterlegt werden. Somit wird ein abgesichertes gemeinsames Surfen nach solchen Informationen möglich, die nur über diese Anwendungen erreichbar sind. Hierunter ist das Suchen in allen Arten von Dateien und nach allen Arten von Informationen zu verstehen, wie z.B. Text- und Bilddaten. Auch ist darunter das Suchen in Dateiverzeichnissen selbst zu verstehen.

Als Clients können auch Standard-Anwendungen, also übliche Browser-Programme, verwendet werden. Dabei sind die Informationen auf Webseiten in einem für Browser-Programme kodierten Format hinterlegt, insbesondere in einem HTTP-Format. Ebenso können Datei-Transferprogramme zum Abrufen von Informationen verwendet werden. Dabei sind die Informationen nach einem für Datei-Transfer-Programme durchführbaren Protokoll abrufbar auf Webservern hinterlegt, um z.B. per FTP-Download abgerufen werden zu können.

Die auf der Benutzeroberfläche erscheinende Darstellung der Netzwerkseiten (Webseiten) erfolgt bevorzugt innerhalb einer vorgebbaren Fenstergröße auf Bildschirmen der Nutzer-PCs. Dazu werden die Bildschirmauflösungen der Bildschirme erfasst und eine Referenzauflösung bestimmt. Dann wird die optimale Fenstergröße als einheitliche Fenstergröße für alle Bildschirme entsprechend der ermittelten Referenzauflösung vorgegeben. Sehr effektiv ist es, wenn die Referenzauflösung gleich der geringsten Bildschirmauflösung bestimmt wird oder wenn sie aus einer Mittelwertbildung über alle erfassten Bildschirmauflösungen bestimmt wird.

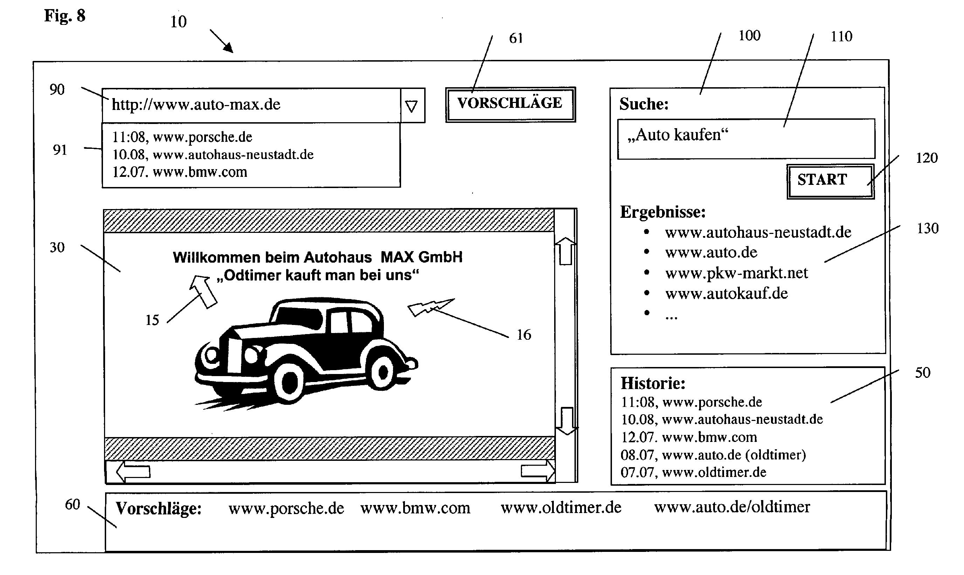

In der Fig. 8 ist als weiteres Ausführungsbeispiel eine Benutzeroberfläche 10 dargestellt, die ebenfalls über bereits anhand der Fig. 1 beschriebene Elemente verfügt, nämlich mit einem Browser-Bereich 30 mit Darstellung beider Maus-Cursor 15 und 16, mit einer Adresszeile 90, mit einem Historienbereich 50 und mit einer Fußzeile 60, wobei diese Elemente zum Teil besondere Funktionen aufweisen, die nachfolgend näher beschrieben werden. Außerdem hat die Benutzeroberfläche 10 noch einen Suchbereich 100 mit einem Sucheingabe-Feld 110, mit einem Start-Knopf 120 und mit einem Such-Ergebnis-Feld 130, welche auch nachfolgend näher beschrieben werden:

Die Ausführung nach der Fig. 8 mit den genannten Elementen stellt auch eine intelligente Such- und Vorschlagsfunktion bereit, die das gemeinsame Surfen in besonderer Weise unterstützt und benutzerfreundlich gestaltet.

Bei der Such- und Vorschlagsfunktion werden erfindungsgemäß die über das gemeinschaftliche Surfen besuchten Netzwerkseiten erfasst und statistisch ausgewertet, um ein für die beiden Nutzer gemeinsames Surfprofil zu erstellen. Dazu werden zumindest die Adressen, d.h. die URLs, und einige Inhaltsangaben, insbesondere Metatags, der erfassten Netzwerkseiten ausgewertet. Das auf diese Weise erstellte gemeinsame Surfprofil ist Grundlage für eine intelligente Such- und/oder Vorschlagsfunktion, die hier beispielhaft anhand der Fig. 8 näher erläutert wird:

Zunächst betrachten wir die erfindungsgemäße Suchfunktion: Wie im Feld 110 zu sehen ist, möchte einer der Nutzer etwas zu den Begriffen "Auto kaufen" suchen lassen. Durch Eingabe der Suchbegriffe in das Suchfeld 110 und durch Betätigen des Funktionsknopfes 120, d.h. dem "START"-Button, wird die rechnergesteuerte Suche gestartet. Dazu sucht das System zu den eingegebenen Suchbegriffen entsprechende oder ähnliche Begriffe in dem Suchprofil, das für die beiden Nutzer erstellt worden ist. Das Suchprofil enthält u.a. auch die besuchten URLs, die in den Historienfeld 50 gezeigt werden sowie weitere Daten, wie etwa Inhaltsangaben, Datum, Besuchsdauer der besuchten Webseiten. Im gezeigten Beispiel haben die Nutzer bereits verschiedene Websites (Internetauftritte) und einzelne Webseiten (Internetseiten) besucht, wie z.B. www.porsche.de, www.autohaus-neustadt.de oder unter der URL www.auto.de dort abgebotene Unterseiten und sonstige Informationen zu "Oldtimern" usw. Diese URLs sind durch Filterung der Surfprofil-Daten gewonnen worden und werden in der Historie angezeigt. Das Daten-Filter wurde nach dem Eingabebegriff "Auto kaufen" definiert und führte zu dem in der Fig. 8 gezeigten Ergebnis.

Um nun Ergebnisse für die konkrete im Feld 110 eingegebene Suchanfrage "Auto kaufen" zu liefern, führt das System (ein dort auf einem Rechner implementierter Algorithmus) zunächst eine Suche im herkömmlichen Sinne durch, d.h. so wie ein üblicher Suchalgorithmus. Das sich daraus ergebende Zwischenergebnis wird anschließend optimiert durch eine Auswertung der Surfprofildaten. Dabei korreliert der Algorithmus das Zwischenergebnis mit den gefilterten Surfprofildaten (s. Daten in der Historie 50) und präsentiert als Ergebnis 130 diejenigen Daten zuerst, die auch mit einer bestimmten Häufigkeit in dem Surfprofil vorkommen. Somit wird das Ergebnis entsprechend dem erfassten gemeinsamen Nutzer-Verhalten optimiert. Die Nutzer erhalten entsprechend ihren aus dem Surfprofil ableitbaren Interessens-Schwerpunkten ein für ihre Nutzergemeinschaft (Surfgemeinschaft) persönlich zugeschnittenes Ergebnis. Im hier gezeigten Beispiel werden als Ergebnis zuerst diejenigen URLs angegeben, die bereits im Rahmen des gemeinsamen Surfens besucht worden waren und zu den eingegebenen Suchbegriffen "Auto kaufen" korrelieren, nämlich die URLs "www.autohaus-neustadt.de" und "www.auto.de". Die übrigen URLs "www.pkw-markt.net" und "www.autokauf.de" stammen aus dem Zwischenergebnis der herkömmlichen Suche. Insgesamt wird also beiden Nutzern ein optimiertes Ergebnis präsentiert, das ihre Interessen berücksichtigt und somit auf größere Resonanz stößt als ein herkömmlich erzeugtes Ergebnis. Es sind noch viele weitere Daten aus dem Surfprofil geeignet, um ein möglichst optimales Suchergebnis zu erzeugen. Zum Beispiel kann das System auch die aktuelle Uhrzeit der Suche mit den Uhrzeiten der im Surfprofil gespeicherten URLs (s. Historie 50) vergleichen und für die Optimierung des Ergebnisses heranziehen. Wird z.B. nach "Pizza" gesucht und liegt die aktuelle Suchzeit in der Abendzeit (18:00-22:00 Uhr), dann werden bevorzugt Webseiten angezeigt, deren URLs von den beiden Nutzern zu eben dieser Zeit bereits "angesurft" worden sind, also etwa Webseiten von Abendlokalen, insbesondere von Pizzerien und italienische Restaurants. Findet die Suche jedoch eher tagsüber statt, insbesondere während der Mittagszeit (11:00-14:00 Uhr), dann werden entsprechende zeitgefilterte Ergebnisse erzeugt, die z.B. zu Webseiten von Pizzadiensten und Schnellimbissen führen. Auch andere Parameter können berücksichtigt werden, sofern sie innerhalb des Surfprofils erfasst sind, wie z.B. Datum, Jahreszeit, Ort, Sprache. Bei der Berücksichtigung von Sprache ist nicht nur die Landessprache der Nutzer ein Kriterium, sondern auch andere damit einhergehenden Kriterien, wie z.B. gewisse sprachliche Eigenheiten der Nutzer, insbesondere Schreibfehler und ganz besonders semantische Fehler.

Wenn beispielsweise ein Nutzer die unterschiedliche Bedeutung des deutschen Begriffes "sensibel" und des englischen Begriffes "sensible" nicht kennt und beide Begriffe gleichermaßen im Sinne von "empfindsam" versteht, kann das System anhand der Surfverhaltens des Nutzers dieses Missverständnis erkennen und im Rahmen der Such- und Vorschlagsfunktion ausgleichen. Dann würde das System dem Nutzer die Frage stellen: >Meinten Sie etwa "sensitive" ?<. Das System wird nämlich beim gemeinsamen Surfen schnell eine Diskrepanz zwischen dem falschen Verständnis des einen Nutzers und dem wahrscheinlich richtigen Verständnis des anderen Nutzers erkennen. Diese semantische Korrekturfähigkeit des erfindungsgemäßen Verfahrens und Systems wird noch deutlicher anhand folgenden Beispiels:

Durch das Surfverhalten der Nutzer ergibt sich in dem vom System erstellten Surfprofil und der darüber erstellten Statistik, dass die Nutzer besondere Interessen auf dem Gebiet der Computertechnologie haben. Also muss die Eingabe des Suchbegriffes "Chips" höchstwahrscheinlich als eine Suchanfrage nach Treffen in eben diesem Bereich verstanden werden. Das System reagiert entsprechend und filtert alle Treffer im Bereich Computertechnologie positiv aus - die Treffer im Bereich Lebensmittel, insbesondere KartoffelChips, filtert das System entsprechend negativ aus, so dass die Nutzer nur die für sie relevanten Ergebnisse erhalten.

In diesem Zusammenhang werden bevorzugt auch Kommentierungen der Nutzer zu den bereits besuchten Webseiten erfasst und im Profil gespeichert, um dann bei der Optimierung der Such-Ergebnisse herangezogen zu werden. Auch durch eine Auswertung der Kommentierungen können insbesondere semantische nutzerspezifische Fehler erkannt werden.

Die beschriebene Vorgehensweise bei der Optimierung von Such-Ergebnissen kann auch in umgekehrter Reihenfolge durchgeführt werden. Das heißt, dass zuerst die Eingabe der Suchbegriffe anhand der Surfprofile optimiert wird und dann eine übliche Suchroutine erfolgt. Vorzugsweise wird aber die oben genannte Methode verwendet.

Das hier vorgestellte und anhand der Fig. 8 näher beschriebene Verfahren und System stellt auch eine Vorschlagsfunktion zur Verfügung, bei der durch Auswerten des Surfprofils eine Auswahl von Adressen von bereits besuchten Netzwerkseiten vorgeschlagen wird, die anhand von Ähnlichkeiten zwischen der aktuell besuchten Netzwerkseite und den im Surfprofil gespeicherten Daten zu den bereits besuchten Netzwerkseiten erzeugt wird.
- Wie anhand des Vorschlagfeldes 60 zu erkennen ist, werden Vorschläge für die bereits besuchten Webseiten "www.porsche.de", "www.bmw.com", "www.oldtimer.de" und "www.auto.de/oldtimer" gemacht (vergl. Historie 50), die zu der aktuell besuchten Website "www.auto-max.de" passen. Auf dieser Website des Autohauses "MAX GmbH" befinden sich gerade die beiden Nutzer und anhand einer Auswertung der URL und auch der Metatags sowie des Inhaltes dieser Website (mit dem Slogan "Oldtimer kauft man bei uns") erkennt das System, dass auf dieser Website Autos, insbesondere Oldtimer, zum Kauf angeboten werden. Deshalb führt ein Vergleich mit den im Surfprofil abgespeicherten Daten zu den im Feld 60 angezeigten Vorschlägen "www.oldtimer.de" und "www.auto.de/oldtimer". Aus einer genaueren Analyse der Daten und aus dem Vergleich mit der aktuellen Website "www.auto-max.de" ergeben sich noch die weiteren Vorschläge, nämlich zu den Websites der Auto-Marken "www.porsche.de" und "www.bmw.com", weil das System erkennt, dass die Nutzer sich bereits vormals für ältere Fahrzeuge dieser Auto-Marken interessiert haben. Das System kann noch weitere im Profil gespeicherte Daten auswerten und somit die Vorschläge präzisieren, z.B. durch Berücksichtigung von Zusatzangaben zu den über das gemeinschaftliche Surfen besuchten Netzwerkseiten, insbesondere von Besuchszeit und/oder Besuchsdauer. Auch können weitere Inhaltsangaben erfasst und ausgewertet werden, insbesondere Extrakte aus den Text-Informationen der Netzwerkseiten. Ebenso können die in der Historie erfassten Kommentierungseingaben der Nutzer, die mittels der Mal- oder Kommentierfunktion zur Kommentierung der besuchten Netzwerkseiten gemacht wurden, ausgewertet werden. Viele weitere Varianten sind denkbar.

Um beim gemeinsamen Surfen Vorschläge für Adressen von Webseiten zu erhalten, ist auf der Benutzeroberfläche ein Schaltknopf (Button) 61 vorgesehen, den jeder der beiden Nutzer anklicken kann. Sobald dies geschieht, ermittelt das System, insbesondere ein auf einem Systemrechner laufender Algorithmus, die Daten für die Vorschläge, die schließlich im Feld 60 in Form von URLs, Hyperlink und/oder Links angezeigt werden. Ergänzend oder alternativ dazu wird auch die Pull-Down-Historien-Anzeige 91 optimiert. Das bedeutet, dass in einem unterhalb des Adressfeldes 90 angeordneten aufklappbaren Feldes 91 alle diejenigen Historien-Einträge zu den bereits besuchten Webseiten angezeigt werden, die gemäß der Auswertung des Surfprofils deutlich mit der aktuell besuchten Website korrelieren. Somit erscheinen auch hier entsprechende URL-Vorschläge, die jetzt sofort per Scrolling und Mausklick angesurft werden können.

Sowohl bei dem gemeinsamen Surfen wie auch bei dem gemeinsamen Suchen kann es vorkommen, dass die jeweils besuchte Netzwerkseite, insbesondere Webseite, den beiden Nutzern in unterschiedlicher Art und Weise angezeigt wird. Als Lösung wird hierzu eine besondere Ausgestaltung der Erfindung vorgestellt, bei der die Darstellung der Netzwerkseiten innerhalb einer vorgebbaren Fenstergröße auf den Bildschirmen der Nutzer erfolgt, wobei die Bildschirmauflösungen der Bildschirme und eine Referenzauflösung bestimmt wird. Dann wird die Fenstergröße als einheitliche Fenstergröße für alle Bildschirme entsprechend der ermittelten Referenzauflösung vorgegeben. Vorzugsweise wird die Referenzauflösung gleich der geringsten Bildschirmauflösung bestimmt oder aus einer Mittelwertbildung über alle erfassten Bildschirmauflösungen bestimmt. Damit erhält man zunächst auf beiden Seiten eine einheitliche Darstellung.

Dennoch können die Darstellungen weiterhin voneinander abweichen, weil z.B. die Darstellung von Pop-Up-Fenstern, von der jeweiligen Browserdarstellung abhängig ist und ggf. noch von Nutzerdaten, die als sog. Cookies auf den einzelnen Computern abgespeichert sind. Um auch hier eine optimale einheitliche Darstellung für beide Nutzer zu erhalten, werden als Steuerbefehle auch Browsereinstellungen, insbesondere Daten über die Aktivierung von Pop-Up-Blockern usw. berücksichtigt. So werden beispielsweise keine Pop-Up-Fenster angezeigt, sobald zumindest einer der beiden Nutzer das Blockieren von Pop-Ups innerhalb seiner Anwendung (Browser) aktiviert hat.

Auch können unterschiedliche Einstellungen von Bannergrößen (FullSize, HalfSize) zu verschiedenen Darstellungen führen. In diesen Fällen eignen sich ein Vergleich beider Größen und die einheitliche Reduktion der Darstellung auf die kleinste Bannergröße. Der Vergleich ist insbesondere bei HTML-Seiten schnell und effektiv durchführbar, weil lediglich die entsprechenden Quellcodedaten übermittelt und ausgewertet werden müssen, und nicht etwa die Bannerbilddateien selbst.

Auch werden Informationen zwischen den Nutzern darüber ausgetauscht, ob die Darstellung des jeweils anderen Nutzers fehlerfrei ist. Beispielsweise hat der Nutzer A momentan Probleme mit der Qualität seiner Internetverbindung und erhält keine Darstellung der besuchten Webseite, sondern lediglich eine Fehlermeldung mit einem Fehlercode, typischerweise mit der Code-Nr. "404". Dann wird durch das erfindungsgemäße Verfahren und System dies erkannt und dem anderen Nutzer B mitgeteilt, z.B. durch eine Anzeige auf seiner Benutzeroberfläche, insbesondere durch ein Fehler-Pop-Up wie etwa "Der Browser des Nutzers A kann die aktuelle Webseite nicht darstellen (Fehlercode 404)". Entsprechendes gilt für andere Fehlerfälle, wie z.B. "Zugriff wurde dem Nutzer A verweigert (Access denied)". In allen Fällen braucht der Anwendung des Nutzers B nur der jeweilige Fehlercode (z.B. "404") übermittelt zu werden, die dann den entsprechenden Hinweistext aus einer Liste abruft und dem Nutzer A anzeigt.

Außerdem können zeitliche Unterschiede die Einheitlichkeit der Darstellung stören. Wenn z.B. beim Nutzer A deutlich früher eine besuchte Webseite geladen wird, als beim Nutzer B, so können evtl. zwischenzeitliche Änderungen (Banner, News, Refreshes) der Webseite zu verschiedenen Darstellungen führen. Um dies zu vermeiden wird vorgeschlagen, dass die Quellcodes der beiden dargestellten Webseiten verglichen werden und bei Abweichung voneinander den beiden Nutzern ein Hinweis angezeigt wird, etwa in der Form "Achtung, die aktuellen Webseite wird dem anderen Nutzer NICHT identisch angezeigt - Bitte machen Sie einen Reload".

### Bezugszeichenliste

- 1; 10: Benutzeroberfläche
- 2: Kopfzeile
- 3; 30: Browser-Bereich
- 4: Nachrichtenbereich
- 5; 50: Historienbereich
- 6; 60: Fußzeile mit Empfehlungen / Vorschlägen
- 7a bis 7c: Schaltflächen zum Moduswechsel
- 7d: Funktionsknopf zur Publikation
- 8: Personenleiste
- 9; 90: Adresszeile
- 10: Gemeinsame Favoriten
- 11, 12: Vor und Zurück-Schaltflächen
- 13: Neu laden-Schaltfläche
- 14; 140: Anzeigebereich
- 15, 16: Mauscursor
- 17: Zentrier-Schaltfläche
- 18: Malen/Zeichnen-Schaltfläche
- 19: Refresh-Knopf
- 20: Suchfeld
- 21: Lupen-Schaltfläche
- 22: Ladevorgang
- 23: Pull-down Knopf
- 91: Pull-down-Historie (gefiltert)
- 61: Vorschlags-Knopf
- 100: Suchbereich
- 110: Sucheingabe
- 120: Start-Knopf
- 130: Such-Ergebnisse (intelligente Auswahl)

## Patentansprüche

1. Verfahren für das gemeinschaftliche Surfen mehrerer Nutzer in einem Rechnernetzwerk mit mehreren Rechnern, die eine Vielzahl von Netzwerkseiten bereitstellen, wobei jedem Nutzer eine eigene Anwendung zugeordnet ist, wobei das Verfahren folgende Schritte umfasst:
(a) Starten eines Modus zum gemeinsamen Surfen in einer ersten Anwendung eines ersten Nutzers und einer zweiten Anwendung eines zweiten Nutzers;
(b) Kopplung der beiden Anwendungen; und
(c) Übertragung der Adresse der gegenwärtigen, von der einen Anwendung angezeigten Netzwerkseite an die andere Anwendung;
(d) Übertragung von an die eine Anwendung gerichteter Steuerbefehle an die andere Anwendung und dortige Ausführung der Steuerbefehle;
(e) Darstellung des Netzwerkseiten-Ladezustandes in der ersten und/oder der zweiten Anwendung.

2. Verfahren nach Anspruch 1, wobei Schritt (e) durch folgenden Schritt (e') ersetzt ist:
(e') Darstellung des Netzwerkseiten-Ladezustandes derjenigen Anwendung, welche die anzuzeigende Netzwerkseite am langsamsten lädt, in der anderen Anwendung.

3. Verfahren nach einem der Ansprüche 1 oder 2, **gekennzeichnet durch** die weiteren Schritte:
- Aussenden einer Einladung zum gemeinsamen Surfen von der ersten Anwendung zu mindestens einer zweiten Anwendung eines zweiten Nutzers;
- Annahme der Einladung **durch** die zweite Anwendung;

4. Verfahren nach einem der vorhergehenden Ansprüche, **dadurch gekennzeichnet, dass** die Anwendungen Programme zum Anzeigen und/oder Abrufen von Informationen sind, die auf den Netzwerkseiten hinterlegt werden, wobei die Informationen in einem für diese Programme kodierten Format hinterlegt werden, insbesondere in einem ausschließlich durch die Programme dekodierbaren Format hinterlegt werden.

5. Verfahren nach einem der vorhergehenden Ansprüche, **dadurch gekennzeichnet, dass** die Anwendungen Browser-Programme zum Anzeigen von Informationen sind, die auf den Netzwerkseiten hinterlegt werden, wobei die Netzwerkseiten Webseiten sind und die Informationen in einem für Browser-Programme kodierten Format hinterlegt werden, insbesondere in einem HTTP-Format hinterlegt werden.

6. Verfahren nach einem der vorhergehenden Ansprüche, **dadurch gekennzeichnet, dass** die Anwendungen Datei-Transferprogramme zum Abrufen von Informationen sind, die auf den Netzwerkseiten hinterlegt sind, wobei die Netzwerkseiten Webseiten sind und die Informationen nach einem für Datei-Transfer-Programme durchführbaren Protokoll abrufbar sind, insbesondere nach dem FTP-Protokoll abrufbar sind.

7. Verfahren nach einem der vorhergehenden Ansprüche, **gekennzeichnet durch** den weiteren Schritt:
- wechselseitige Übertragung von an die erste Anwendung gerichtete Steuerbefehle von der ersten Anwendung an die zweite Anwendung und umgekehrt.

8. Verfahren nach Anspruch 7, **gekennzeichnet durch** den weiteren Schritt:
- gleichzeitige Darstellung sowohl von an die erste als auch an die zweite Anwendung gerichtete Steuerbefehle in einer Anwendung.

9. Verfahren nach einem der vorhergehenden Ansprüche, **gekennzeichnet durch** den weiteren Schritt:
- ausschließlich einseitige Übertragung von an die erste Anwendung gerichteter Steuerbefehle von der ersten Anwendung an die zweite Anwendung.

10. Verfahren nach einem der vorhergehenden Ansprüche, **gekennzeichnet durch** den weiteren Schritt:
- Bereitstellung einer Mal- oder Kommentierfunktion zur Kommentierung einer angezeigten Netzwerkseite.

11. Verfahren nach Anspruch 10, **dadurch gekennzeichnet, dass** die Kommentierfunktion eine auf eine angezeigte Netzwerkseite aufgebrachte Zeichen- oder Kommentierfläche umfasst.

12. Verfahren nach einem der vorhergehenden Ansprüche, **gekennzeichnet durch** den weiteren Schritt:
- Bereitstellung einer Zentrierfunktion zur Neuausrichtung einer angezeigten Netzwerkseite.

13. Verfahren nach Anspruch 12, **gekennzeichnet durch** den weiteren Schritt:
- Ausführen der Zentrierfunktion **durch** ein Zentrieren der angezeigten Netzwerkseite auf einen Cursor des ersten und/oder des zweiten Nutzers.

14. Verfahren nach einem der vorhergehenden Ansprüche, **gekennzeichnet durch** den weiteren Schritt:
- Zusammenfassung der Adressen der angezeigten Netzwerkseiten zu einem Eintrag und Speicherung des Eintrages.

15. Verfahren nach Anspruch 14, **gekennzeichnet durch** den weiteren Schritt:
- Speicherung weiterer Informationen wie Nutzernamen, Status oder Datum als Teil des Eintrages.

16. Verfahren nach einem der vorhergehenden Ansprüche, **gekennzeichnet durch** den weiteren Schritt:
- Zusammenfassung der Adressen der von mehreren Nutzern gleichsam bevorzugten Netzwerkseiten in einer gemeinsamen Favoritenliste.

17. Verfahren nach einem der vorhergehenden Ansprüche, **gekennzeichnet durch** den weiteren Schritt:
- Darstellung der anwendungsgemäßen Ansicht des einen Nutzers in der Anwendung des anderen Nutzers.

18. Verfahren nach einem der vorigen Ansprüche, **gekennzeichnet durch** die weiteren Schritte:
- Darstellen der Netzwerkseiten **durch** Anwendungen innerhalb einer vorgebbaren Fenstergröße auf Bildschirmen der Nutzer,
- Erfassen der Bildschirmauflösungen der Bildschirme, und Bestimmen einer Referenzauflösung
- Vorgeben der Fenstergröße als einheitliche Fenstergröße für alle Bildschirme entsprechend der ermittelten Referenzauflösung.

19. Verfahren nach Anspruch 18, **dadurch gekennzeichnet, dass** die Referenzauflösung gleich der geringsten Bildschirmauflösung bestimmt wird oder aus einer Mittelwertbildung über alle erfassten Bildschirmauflösungen bestimmt wird.

20. Verfahren nach einem der vorigen Ansprüche, **gekennzeichnet durch** die weiteren Schritte:
- Erfassen der über das gemeinschaftliche Surfen besuchten Netzwerkseiten;
- Auswerten zumindest der Adressen und Inhaltsangaben, insbesondere Metatags, der erfassten Netzwerkseiten und Erstellen eines für die Nutzer gemeinsamen Surfprofils;
- Auswerten des Surfprofils zumindest bei Eingabe eines Suchbegriffes **durch** einen Nutzer und Erzeugen sowie Vorschlagen einer Auswahl von Adressen von bereits besuchten Netzwerkseiten anhand des erstellten Surfprofils, insbesondere anhand von Ähnlichkeiten zwischen dem Suchbegriff und den Inhaltsangaben der Netzwerkseiten.

21. Verfahren nach Anspruch 20, **gekennzeichnet durch** die weiteren Schritte:
- Erfassen der von Zusatzangaben zu den über das gemeinschaftliche Surfen besuchten Netzwerkseiten, insbesondere von Besuchszeit und/oder Besuchsdauer; und/oder
- Erfassen von weiteren Inhaltsangaben, insbesondere Extrakten aus den Text-Informationen der Netzwerkseiten;
- Auswerten der Zusatzangaben für das Erstellen des Surfprofils.

22. Verfahren nach den Ansprüchen 10 und 20, **gekennzeichnet durch** die weiteren Schritte:
- Erfassen von Kommentierungseingaben der Nutzer, die mittels der Mail- oder Kommentierfunktion zur Kommentierung der besuchten Netzwerkseiten gemacht werden;
- Auswerten der Kommentierungseingaben für das Erstellen des Surfprofils.

23. System zur Durchführung des Verfahrens nach einem der Ansprüche 1 bis 22.
